# EUROPEAN PATENT SPECIFICATION

(11) **EP 2 398 615 B1**
(45) Date of publication and mention of the grant of the patent: **18.12.2019**
(21) Application number: 10744131.3
(22) Date of filing: 04.02.2010
(51) Int. Cl.: B23C 5/10, B23C 5/12, B23C 5/02, B23B 51/00

(54) **ROTARY CUTTING TOOL WITH WAVE PATTERN**
ROTATIONSSCHNEIDINSTRUMENT MIT WELLENSTRUKTUR
OUTIL DE COUPE ROTATIF POURVU D'UN MOTIF ONDULÉ

(30) Priority: 17.02.2009 US 371952
(43) Date of publication of application: 28.12.2011
(73) Proprietor: KENNAMETAL INC., Latrobe, PA 15650 (US)
(72) Inventor: DAVIS, Danny R., Asheboro NC 27205 (US)
(74) Representative: Prinz & Partner mbB
(86) International application number: PCT/US2010/023197
(87) International publication number: WO 2010/096280

(56) References cited:
- EP-A2- 1 072 345
- WO-A1-2007/123326
- WO-A1-2008/103889
- GB-A- 1 285 076
- JP-A- 8 168 915
- US-A- 5 908 269
- US-A1- 2007 098 506
- US-A1- 2008 206 003

## Description

### FIELD OF THE INVENTION

The present invention pertains to a rotary cutting tool. More particularly, the present invention relates to an end mill with a wave pattern that repeats for each alternating blade.

### BACKGROUND OF THE INVENTION

Rotary cutting tools, such as end mills, typically have a cylindrical configuration that includes a shank portion and a cutting portion. The cutting portion contains a plurality of helically disposed cutting blades that extend from a first end (i.e., the "shank end") of the cutting portion adjacent the shank portion, toward the opposite end (i.e., the "free end") of the cutting portion. In some embodiments, the cutting edges of the helical teeth or blades are disposed along a substantially constant radius with respect to the longitudinal axis of the tool. In other embodiments, generally referred to as "tapered" cutting tools, the cutting portion is substantially frustoconical in shape; i.e., the cutting edge of each blade has a constantly decreasing radius with respect to the longitudinal axis of the tool as the cutting edge extends from the shank end of the cutting portion to the free end. The cutting edges of the blades in a tapered rotary cutting tool are at the same radius from the longitudinal axis of the tool in any plane through the cutting portion and perpendicular to the longitudinal axis of the tool. In still other end mill embodiments, generally referred to as "straight-fluted" rotary cutting tools, the cutting edges of the blades extend parallel to the longitudinal axis of the tool.

It has long been known that in many machining operations end mill performance is improved by serration of the cutting edge. Cutters of this type are listed in tool catalogs and are available off-the-shelf. However, there is no consensus regarding the optimum form of the serrations. A common form is the sine wave.

US 2008/0206003 A1 discloses a rotary cutting tool having a plurality of blades, wherein the geometry of the blades differs from blade to blade. The geometry may be periodic (e.g. sinusoidal), non-periodic or a combination thereof and this geometric pattern begins either directly at the cutting tip of the tool or is staggered relative to the cutting tip beginning at different position at each blade

US 2007/0098506 A1 discloses a rotary cutting tool with a shank portion, a cutting portion and a plurality of chip-breaking features. The chip-breaking features are disposed in the land surface and disrupt the otherwise continuous cutting edge of a cutting blade.

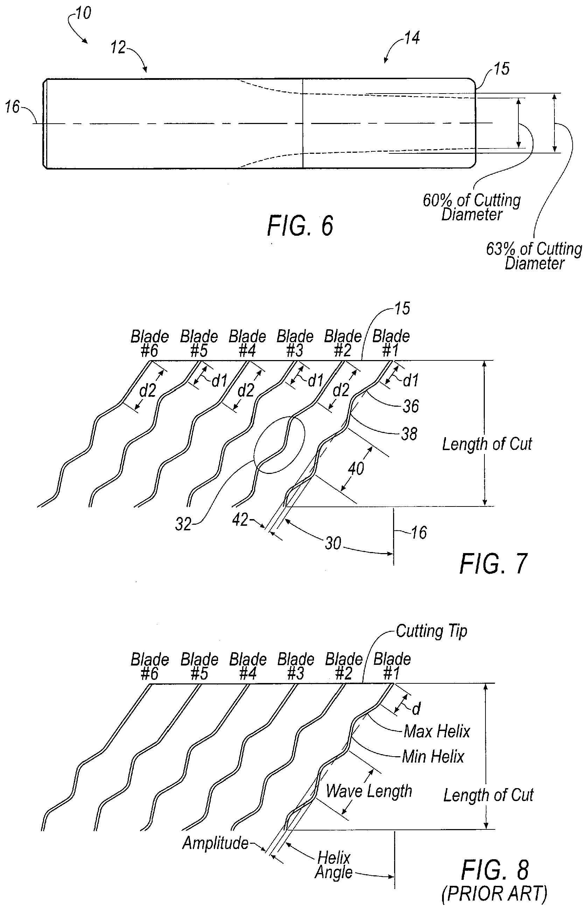

A conventional sine wave pattern for a six-fluted end mill design is shown in FIG. 8. As seen, the typical sine wave pattern is such that a distance, d, from the cutting tip to the first wave increases for each sequential blade. For example, the distance, d, from the cutting tip to the first wave is the shortest for blade #1 and then continuously increases for each sequential blade. Thus, the distance, d, is largest for blade #6. Also, a typical end mill has a helix angle between about thirty (30) and about thirty-five (35) degrees.

Unfortunately, the conventional end mill design described above may not receive the benefit of the sine wave pattern for all the blades for different axial depths of cuts. For example, the conventional sine wave pattern described above may be suitable for a wide variety of cutting operations, but may not be suitable for some cutting operations, such as a slotting operation. Therefore, it is desirable to provide a rotary cutting tool that overcomes the shortcomings of the prior art.

### SUMMARY OF THE INVENTION

According to the present invention, a rotary cutting tool with a longitudinal axis comprises a shank portion; and a cutting portion extending from the shank portion to a cutting tip, the cutting portion having a length of cut, and a plurality of blades separated by flutes extending along the length of cut, and wherein each of the blades includes a leading face, a trailing face, a land surface extending between the leading face and the trailing face, and a cutting edge at the intersection between the leading face and the land surface; each blade forming a wave pattern having a wave length and an amplitude. The wave pattern begins at a first distance from the cutting tip for a first blade of the plurality of blades, the wave pattern repeating at the first distance for each alternating blade of the plurality of blades. The wave pattern begins at a second, different distance from the cutting tip for a second blade of the plurality of blades, the wave pattern repeating at the second distance from each alternating blade of the plurality of blades.

In another embodiment, a rotary cutting tool with a longitudinal axis comprises a shank portion; and a cutting portion extending from the shank portion to a cutting tip, the cutting portion having a length of cut, and a plurality of blades separated by flutes extending along the length of cut, and wherein each of the blades includes a leading face, a trailing face, a land surface extending between the leading face and the trailing face, and a cutting edge at the intersection between the leading face and the land surface; each blade forming a wave pattern having a wave length and an amplitude. A radial rake angle of each cutting edge of each blade is always positive along the length of cut.

### BRIEF DESCRIPTION OF THE DRAWINGS

While various embodiments of the invention are illustrated, the particular embodiments shown should not be construed to limit the claims. It is anticipated that various changes and modifications may be made without departing from the scope of this invention.
FIG. 1 is a side view of a rotary cutting tool with wave pattern in accordance with an embodiment of the invention.
FIG. 2 is a perspective end view of the cutting portion of the rotary cutting tool of FIG. 1.
FIG. 3 is a cross-sectional view of the rotary cutting tool showing the blade and flute spacing in accordance with an embodiment of the invention.
FIG. 4 is an enlarged cross-sectional view of the blade showing a positive radial rake angle at the point of minimum helix in accordance with an embodiment of the invention.
FIG. 5 is an enlarged cross-sectional view of the blade showing a positive radial rake angle at the point of maximum helix in accordance with an embodiment of the invention.
FIG. 6 is a plan view of a tapered fluted core design according to an embodiment of the invention.
FIG. 7 is a schematic view of a six-fluted rotary cutting tool with a wave pattern in which the wave pattern of alternative blades begin at the same distance from the cutting tip according to an embodiment of the invention.
FIG. 8 is a schematic view of a wave pattern for a conventional six-fluted rotary cutting tool.

### DETAILED DESCRIPTION OF THE INVENTION

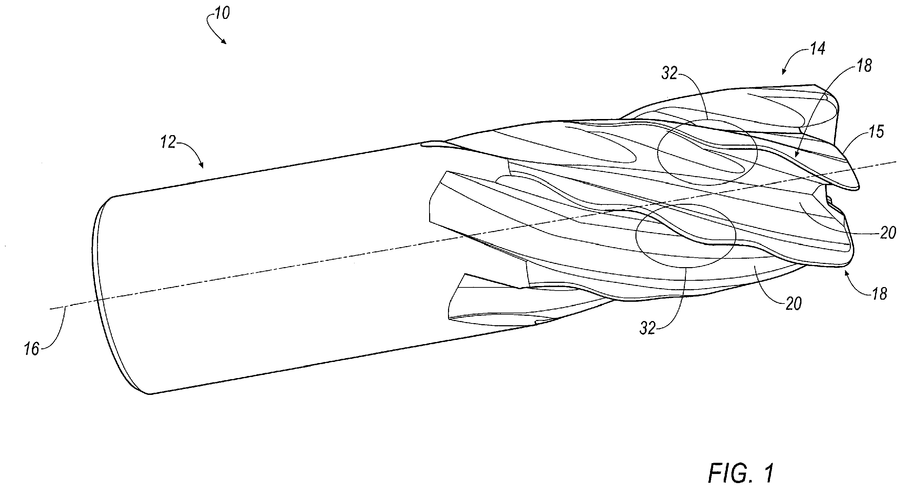

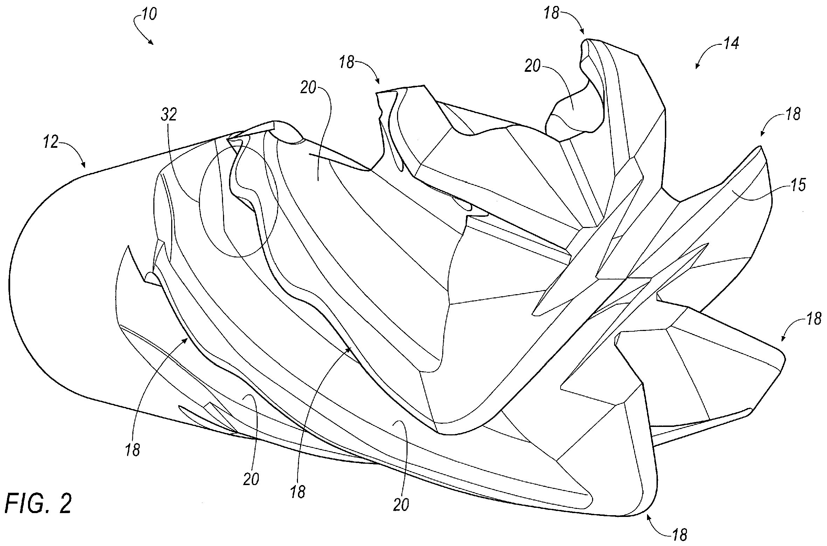

Referring now to FIGS. 1 and 2, a rotary cutting tool 10, such as an end mill and the like, includes a shank portion 12, a cutting portion 14 extending from the shank portion 12 and having a cutting tip 15, and a longitudinal axis 16. The overall shape of the cutting portion 14 may be, but is not limited to, a cylindrical shape or a frustoconical shape. The cutting portion 14 includes a plurality of blades 18 separated by flutes 20 extending the length of the cutting portion 14. Each blade 18 is provided along its length with a repeated sine wave pattern 32. In the illustrated embodiment, the rotary cutting tool 10 has a total of six (6) blades 18 and flutes 20. However, it will be appreciated that the invention is not limited by the number of blades and flutes, and that the invention can be practiced with a fewer or a greater number of blades and flutes. For example, the invention can be practiced with four (4) blades and flutes, eight (8) blades and flutes, and the like.

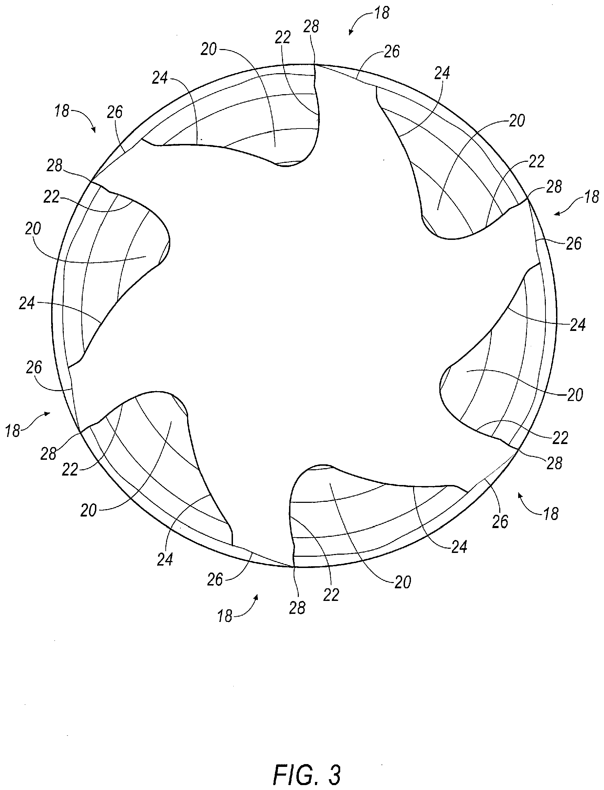

Referring now to FIG. 3, each of the blades 18 has a leading face 22, a trailing face 24, and a land surface 26 bridging the leading face 22 and trailing face 24. The intersection between the leading face 22 and the land surface 26 forms a cutting edge 28 for the respective blade 18. In the illustrated embodiment, the blades 18 and flutes 20 of the cutting portion 14 extend helically within the cutting portion 14 at a helix angle 30 (FIG. 7) of about twenty-eight (28) degrees, as compared to the conventional end mill of FIG. 8 having a helix angle of between about thirty (30) to thirty-five (35) degrees.

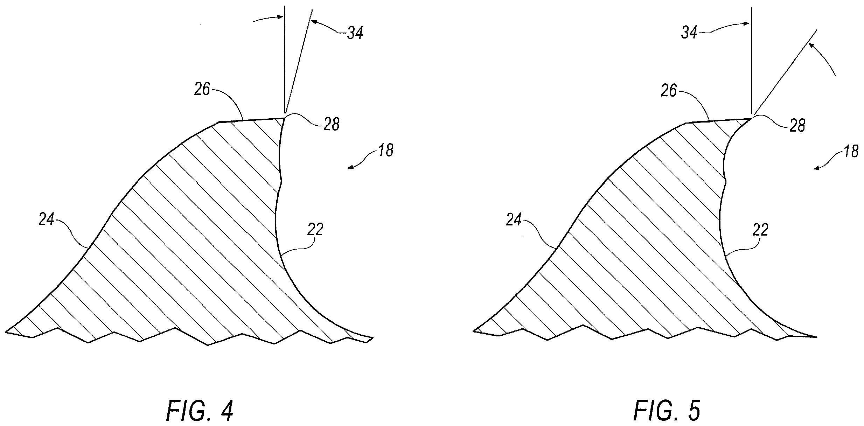

In one embodiment of the invention the radial rake angle varies along the length of cut (LOC), but always remains positive throughout the LOC. FIG. 4 shows a radial rake angle 34 at the point of minimum helix 38(FIG. 7) of about +7 degrees±2 degrees. FIG. 5 shows the radial rake angle 34 at the point of maximum helix 36 (FIG. 7) of about +12 degrees±2 degrees. Thus, the radial rake angle 34 is considerably greater at the point of maximum helix 36 than at the point of minimum helix 38 and varies between about five (+5) degrees to about fifteen (+15) degrees.

Referring now to FIG. 6, the depth of the flutes 20 in the cutting portion 14 varies along the longitudinal axis 16 of the rotary cutting tool 10. Specifically, the depth of the flutes 20 in the cutting portion 14 is relatively less proximate the shank portion 12 and is relatively greater proximate the cutting tip 15. In the illustrated embodiment, for example, the depth of the flutes 20 may be about 63% of the cutting diameter proximate the shank portion 12 (shown as a solid line in FIG. 6) and about 60% of the cutting diameter proximate the cutting tip 15 (shown as a dashed line in FIG. 6).

Referring now to FIG. 7, the wave pattern 32 of each blade 18 in a six-bladed end mill design is schematically shown according to an embodiment of the invention. As used herein, the wave pattern 32 is defined as a sinusoidal-shaped blade pattern having a series of peaks and valleys defining a wave length (or period) and an amplitude along the length of cut. As shown in FIG. 7, the wave pattern 32 is defined by a series of waves, each wave having a wave length 40 and an amplitude 42. In the illustrated embodiment, the wave length 40 and the amplitude 42 are substantially identical for each blade 18. According to the invention the distances from the cutting tip at which the wave pattern begins is substantially identical for each alternating blade. In other words, in the illustrated six-bladed design, the wave pattern 32 begins at a first distance, d1, from the cutting tip 15 for blades #1, #3 and #5, and the wave pattern 32 begins at a second distance, d2, from the cutting tip 15 for blades #2, #4 and #6. As a result of this unique wave pattern, the end mill 10 receives the benefit of the wave-shaped blade on all blades in different axial depths of cuts, rather than just the first two or three blades of the conventional end mill shown in FIG. 8.

It will be appreciated that the principles of the invention can be practiced with an end mill design having any even number of blades. For example, the invention can be practiced with a four-fluted design in which blades #1 and #3 begin at the same first distance from the cutting tip, and blades #2 and #4 begin at the same second distance from the cutting tip. In another example, the invention can be practiced with an eight-fluted design in which blades #1, #3, #5 and #7 begin at the same first distance from the cutting tip, and blades #2, #4, #6 and #8 begin at the same second distance from the cutting tip.

The patents and publications referred to herein are hereby incorporated by reference.

Having described presently preferred embodiments the invention may be otherwise embodied within the scope of the appended claims.

## Claims

1. A rotary cutting tool (10) with a longitudinal axis (16), comprising:
a shank portion (12); and
a cutting portion (14) extending from the shank portion (12) to a cutting tip (15), the cutting portion (14) having a length of cut, and a plurality of blades (18) separated by flutes (20) extending along the length of cut, each of the blades (18) including a leading face (22), a trailing face (24), a land surface (26) extending between the leading face (22) and the trailing face (24), and a cutting edge (28) at the intersection between the leading face (22) and the land surface (26), each blade (18) forming a wave pattern (32) having a wave length (40) and an amplitude (42) wherein each cutting edge (28) defines a varying helix angle,
**characterized in that** the wave pattern (32) begins at a first distance (d1) from the cutting tip (15) for a first blade of the plurality of blades (18), the wave pattern (32) repeating at the first distance (d1) for each alternating blade of the plurality of blades (18) and
that the wave pattern (32) begins at a second, different distance (d2) from the cutting tip (15) for a second blade of the plurality of blades (18), the second blade immediately adjacent the first blade, the wave pattern (32) repeating at the second distance (d2) for each alternating blade of the plurality of blades (18),
wherein a radial rake angle (34) of each cutting edge (28) of each blade (18) is always positive along the length of cut and varies between about 5 degrees to about 15 degrees,
wherein the radial rake angle (34) is smaller at a point of a minimum helix angle (38) defined by the corresponding cutting edge (28) than at a point of a maximum helix angle (36) defined by the corresponding cutting edge (28).

2. The rotary cutting tool according to Claim 1, wherein the wave pattern (32) is sinusoidal in shape.

3. The rotary cutting tool according to Claim 1, wherein a depth of each flute (20) varies along the longitudinal axis (16) from the cutting tip (15) toward the shank portion (12).

4. The rotary cutting tool according to Claim 3, wherein the depth of each flute (20) is greater proximate the cutting tip (15).

5. The rotary cutting tool according to Claim 1, wherein each blade (18) forms a helix angle (34) of about twenty-eight degrees with respect to the longitudinal axis (16).

6. The rotary cutting tool according to one of the preceding claims, wherein the wave length (40) and the amplitude (42) are the same for each blade (18) of the plurality of blades (18).

## Patentansprüche

1. Rotierendes Schneidwerkzeug (10) mit einer Längsachse (16), das Folgendes umfasst:
einen Schaftabschnitt (12); und
einen Schneideabschnitt (14), der von dem Schaftabschnitt (12) zu einer Schneidespitze (15) verläuft, wobei der Schneideabschnitt (14) einen Schneidebereich und eine Vielzahl von Klingen (18) aufweist, die durch Spannuten (20), die entlang des Schneidebereichs verlaufen, getrennt sind, wobei jede der Klingen (18) eine Führungsfläche (22), eine Nachziehfläche (24), eine Aufsetzoberfläche (26), die zwischen der Führungsfläche (22) und der Nachziehfläche (24) verläuft, und eine Schneidkante (28) an dem Schnittpunkt zwischen der Führungsfläche (22) und der Aufsetzoberfläche (26) umfasst, wobei jede Klinge (18) ein Wellenmuster (32) bildet, das eine Wellenlänge (40) und eine Amplitude (42) aufweist, wobei jede Schneidkante (28) einen variierenden Schrägungswinkel definiert,
**dadurch gekennzeichnet, dass** das Wellenmuster (32) für eine erste Klinge der Vielzahl von Klingen (18) in einem ersten Abstand (d1) von der Schneidespitze (15) beginnt, wobei sich das Wellenmuster (32) für jede abwechselnde Klinge der Vielzahl von Klingen (18) in dem ersten Abstand (d1) wiederholt, und
dass das Wellenmuster (32) für eine zweite Klinge der Vielzahl von Klingen (18) in einem zweiten, anderen Abstand (d2) von der Schneidespitze (15) beginnt, wobei die zweite Klinge unmittelbar an die erste Klinge angrenzt, wobei sich das Wellenmuster (32) für jede abwechselnde Klinge der Vielzahl von Klingen (18) in dem zweiten Abstand (d2) wiederholt,
wobei ein radialer Spanwinkel (34) jeder Schneidkante (28) jeder Klinge (18) immer positiv entlang des Schneidebereichs ist und zwischen etwa 5 Grad bis etwa 15 Grad variiert,
wobei der radiale Spanwinkel (34) an einem Punkt eines minimalen Schrägungswinkels (38), der durch die entsprechende Schneidkante (28) definiert ist, kleiner als an einem Punkt eines maximalen Schrägungswinkels (36) ist, der durch die entsprechende Schneidkante (28) definiert ist.

2. Rotierendes Schneidwerkzeug nach Anspruch 1, wobei das Wellenmuster (32) sinusförmig ist.

3. Rotierendes Schneidwerkzeug nach Anspruch 1, wobei eine Tiefe jeder Spannut (20) entlang der Längsachse (16) von der Schneidspitze (15) in Richtung des Schaftabschnitts (12) variiert.

4. Rotierendes Schneidwerkzeug nach Anspruch 3, wobei die Tiefe jeder Spannut (20) in der Nähe der Schneidspitze (15) größer ist.

5. Rotierendes Schneidwerkzeug nach Anspruch 1, wobei jede Klinge (18) einen Schrägungswinkel (34) von etwa achtundzwanzig Grad in Bezug auf die Längsachse (16) bildet.

6. Rotierendes Schneidwerkzeug nach einem der vorstehenden Ansprüche, wobei die Wellenlänge (40) und die Amplitude (42) für jede Klinge (18) der Vielzahl von Klingen (18) gleich sind.

## Revendications

1. Outil de coupe rotatif (10) avec un axe longitudinal (16), comprenant :
une partie de queue (12) ; et
une partie de coupe (14) s'étendant à partir de la partie de queue (12) jusqu'à une extrémité de coupe (15), la partie de coupe (14) ayant une longueur de coupe, et une pluralité de lames (18) séparées par des goujures (20) s'étendant sur la longueur de coupe, chacune des lames (18) incluant une face d'attaque (22), une face de fuite (24), une surface de dépouille (26) s'étendant entre la face d'attaque (22) et la face de fuite (24), et une arête de coupe (28) au niveau de l'intersection entre la face d'attaque (22) et la surface de dépouille (26), chaque lame (18) formant un motif en vague (32) ayant une longueur de vague (40) et une amplitude (42) dans lequel chaque arête de coupe (28) définit un angle d'hélice variable,
**caractérisé en ce que** le motif en vague (32) commence à une première distance (d1) de l'extrémité de coupe (15) pour une première lame de la pluralité de lames (18), le motif en vague (32) se répétant à la première distance (d1) pour chaque lame en alternance de la pluralité de lames (18) et
**en ce que** le motif en vague (32) commence à une deuxième distance différente (d2) de l'extrémité de coupe (15) pour une deuxième lame de la pluralité de lames (18), la deuxième lame immédiatement adjacente à la première lame, le motif en vague (32) se répétant à la deuxième distance (d2) pour chaque lame en alternance de la pluralité de lames (18),
dans lequel un angle de coupe radial (34) de chaque arête de coupe (28) de chaque lame (18) est toujours positif sur la longueur de coupe et varie entre environ 5 degrés et environ 15 degrés,
dans lequel l'angle de coupe radial (34) est plus petit à un point d'un angle d'hélice minimal (38) défini par l'arête de coupe correspondante (28) qu'à un point d'un angle d'hélice maximal (36) défini par l'arête de coupe correspondante (28).

2. Outil de coupe rotatif selon la revendication 1, dans lequel le motif en vague (32) est de forme sinusoïdale.

3. Outil de coupe rotatif selon la revendication 1, dans lequel une profondeur de chaque goujure (20) varie le long de l'axe longitudinal (16) à partir de l'extrémité de coupe (15) en direction de la partie de queue (12).

4. Outil de coupe rotatif selon la revendication 3, dans lequel la profondeur de chaque goujure (20) est plus grande à proximité de l'extrémité de coupe (15).

5. Outil de coupe rotatif selon la revendication 1, dans lequel chaque lame (18) forme un angle d'hélice (34) d'environ vingt-huit degrés par rapport à l'axe longitudinal (16).

6. Outil de coupe rotatif selon l'une des revendications précédentes, dans lequel la longueur de vague (40) et l'amplitude (42) sont identiques pour chaque lame (18) de la pluralité de lames (18).
